# EUROPÄISCHE PATENTSCHRIFT

(11) **EP 1 659 467 B1**
(45) Veröffentlichungstag und Bekanntmachung des Hinweises auf die Patenterteilung: **30.12.2009**
(21) Anmeldenummer: 05022836.0
(22) Anmeldetag: 20.10.2005
(51) Int. Cl.: G05B 19/418, H04L 12/42, H04L 12/24

(54) **Verfahren zum Betreiben eines Netzwerks mit Ringtopologie**
Method for operating a ring topology network
Procédé de fonctionnement d'un réseau en anneau

(30) Priorität: 22.11.2004 DE 102004056364
(43) Veröffentlichungstag der Anmeldung: 24.05.2006
(73) Patentinhaber: Bosch Rexroth AG, 70184 Stuttgart (DE)
(72) Erfinder: Gross, Alexander, 97775 Burgsinn (DE); Preu, Hans-Jürgen, 97816 Lohr am Main (DE)

(56) Entgegenhaltungen:
- EP-A- 0 716 521
- US-B1- 6 285 475
- INTERESSENSGEMEINSCHAFT SERCOS INTERFACE E.V.: "SERCOS-III (Dritte Generation SERCOS interface) Version 1.3.4"[Online] April 2004 (2004-04), Seiten 1-35, XP002356906 Gefunden im Internet: URL:http://www.sercos.de/pdf/SERCOS-III_V1 34d_public.pdf> [gefunden am 2005-12-01]
- "An introduction to Resilient Packet Ring Topology" RESILIENT PACKET RING ALLIANCE, Oktober 2001 (2001-10), XP002198916

## Beschreibung

Die Erfindung betrifft ein Verfahren zum Betreiben eines Netzwerks mit Ringtopologie, eine Vorrichtung, um dieses Verfahren durchzuführen, sowie ein entsprechendes Netzwerk.

### Stand der Technik

Die Bedeutung von Netzwerken oder Netzwerkdiensten ist in jüngster Zeit ständig gestiegen. Neben der allgemein bekannten Verwendung als Kommunikationsplattform, z.B. Internet, ist ebenfalls die Verwendung im industriellen Umfeld von wachsender Bedeutung, z.B. bei untereinander vernetzten Steuerungs- und Automatisierungssystemen.

Vor allem im industriellen Anwendungsbereich ist eine fehlerfreie, ständig verfügbare Netzwerkverbindung der einzelnen Teilnehmer untereinander wichtig, um Probleme in oder gar Ausfälle der Produktion zu vermeiden.

Die zeitlich ununterbrochene Verbindung der Teilnehmer kann aber niemals garantiert werden, da es immer wieder zu Problemen innerhalb der Verbindung, z.B. Kabelbrüchen o.ä., kommen kann.

Deshalb existieren innerhalb der Netzwerktechnik verschiedene Verfahren, um Verbindungsprobleme zu erkennen und evtl. zu beheben.

FDDI ist ein Netzwerkstandard, der häufig für sog. Backbones verwendet wird. Im allgemeinen werden zur Übertragung Lichtwellenleiter (LWL), also Glasfasern, verwendet, die den bestmöglichen Schutz gegen elektromagnetische Störungen bieten. Daneben werden auch kostengünstigere Kupferleitungen für kurze Übertragungswege benutzt, die die gleiche Übertragungsrate bereitstellen.

FDDI ist ein ANSI (American National Standards Institute), Netzwerk-Standard, dessen Netzwerktopologie ringförmig ausgebildet ist. Die meisten Parameter werden im ANSI X3T9.5 festgelegt, Teile sind von der ISO (International Organization for Standardization) übernommen. Die aktuelle Version des Standards ist in ANSI X3T12 festgelegt.

Der FDDI-Standard erlaubt mehrere Ausführungsformen der Netzwerktopologie, wobei im folgenden beispielhaft die Doppelringstruktur beschrieben werden soll.

Ein FDDI-Netzwerk mit Doppelringstruktur weist einen primären (p) und einen sekundären (s) Ring auf. Jeder Teilnehmer besitzt je eine Eingangsschnittstelle (E) bzw. einen Eingang pE, sE und je eine Ausgangsschnittstelle (A) bzw. einen Ausgang pA, sA für jeden Ring. Primärer und sekundärer Ring weisen gegenläufige Übertragungsrichtungen auf.

Bei der normalen Datenübertragung sendet jeder Teilnehmer die Daten, die er an einem Eingang erhalten hat, am zugehörigen Ausgang wieder weiter. Dies erfolgt unabhängig davon, ob die Daten für ihn bestimmt sind und er deshalb zusätzlich eine Datenverarbeitung ausführt. Erhält der ursprüngliche Sender die Daten zurück, ist die Datenübertragung korrekt beendet und der ursprüngliche Sender nimmt die Daten vom Ring.

Der sekundäre Ring bleibt im normalen, fehlerfreien Betrieb ungenutzt. Trotzdem wird kontinuierlich die Fehlerfreiheit dieses Rings durch Übertragen von Leerdaten überprüft.

Eine Unterbrechung des Doppelringes bspw. durch einen Kabeldefekt führt dazu, dass ein Teilnehmer seine auf den primären Ring ausgesandten Daten nicht mehr zurückerhält.

Bei einem auftretenden Fehler, einer erkannten Ringunterbrechung oder dem Überschreiten eines Zeitlimite wird zunächst ein sogenannter Claim-Prozess gestartet. Führt dieser nicht zum Erfolg wird ein sogenannter Beacon-Prozess ausgelöst.

Stationen, die im Laufe des Beacon-Prozesses keine entsprechenden Frames empfangen, identifizieren entweder die Vorgängerstation oder das Glasfaserkabel als defekt und leiten eine Ring-Rekonfiguration ein.

Dazu leitet die Stationen, die in Ringrichtung vor dem Kabelbruch liegt, die über den pE-Port empfangenen Daten nicht mehr über den pA-Port weiter, sondern über den sA-Port auf den Sekundärring um. Da dieser Ring die entgegengesetzte Umlaufrichtung hat, wird so die Bruchstelle umgangen.

In der WO 02/065219 A2 wird ein Verfahren zur Detektion einer Leitungsunterbrechung offenbart, bei der ein Master die selbst gesendeten Telegramme, die über den Doppelring wieder zurück zum Master gelangen, auswertet. Ein Ausbleiben der eigenen Telegramme wird als Leitungsunterbrechung gewertet.

Es ist bekannt, in SERCOS-III-Netzwerken eine Doppelringstruktur unter Verwendung von EthernetVerbindungen auszubilden. Herkömmliche Ethernetverbindungen sind jedoch nicht auf Echtzeitbetrieb ausgelegt und weisen keine echtzeitfähige Ausfallerkennung und -behebung auf.

Die beschriebenen Verfahren benötigen zur Erkennung und anschließenden Behebung einer Störung viel Zeit, was eine Verwendung in Systemen, die eine nahezu ununterbrochene Verbindung benötigen, wie bspw. industrielle Fertigungssysteme, behindert.

Die US 6,285,475 B1 beschreibt ein Verfahren und ein System zum Erkennen von Fehlern in optischen Datenleitungen, wobei ein Teil bzw. Anteil des Datensignals beim Empfänger analysiert wird, wobei aus der Gültigkeit des Signals auf die Unversehrtheit der Datenübertragungsleitung geschlossen wird. Die Datenübertragung erfolgt über optische Fasern, wobei Synchrondatensignale gemäß einem STS-48-Standard verwendet werden.

Ebenfalls bekannt ist die schnelle Erkennung eines Leitungsbruchs in LWL-Doppelringstrukturen durch fehlende Eingangssignalflanken und anschließende Rekonfiguration der beiden Ringe ("Fehlertolerantes Kommunikationssystem für hochdynamische Antriebsregelungen", S. Schulze, Dissertation, Darmstadt, 1995). Glasfasern sind in der Handhabung sehr empfindlich und benötigen eine aufwendige Verbindungstechnik. Daneben erfordert die Verwendung von LWL-Technik erhöhte Bereitstellungs- und Wartungskosten für das Übertragungsmedium selbst, aber auch für Stecker, Netzwerkkarten etc.

Vor diesem Hintergrund werden mit der vorliegenden Erfindung ein Verfahren zum Betreiben eines Netzwerks mit Ringtopologie, weiterhin eine Vorrichtung, die dieses Verfahren verwendet, sowie schließlich ein entsprechendes Netzwerk gemäß den unabhängigen Patentansprüchen vorgestellt. Vorteilhafte Ausgestaltungen ergeben sich aus den jeweiligen Unteransprüchen und der nachfolgenden Beschreibung.

### Vorteile der Erfindung

Bei dem erfindungsgemäßen Verfahren zum Betreiben eines Netzwerks mit Ringtopologie wird eine fehlerhafte Verbindung zwischen zwei Teilnehmern des Netzwerks durch Überwachen des Trägersignal, auch Carrier genannt, erkannt. Als Trägersignal, Träger oder Carrier wird im Rahmen der drahtgebundenen Kommunikationstechnik insbesondere eine Trägerfrequenz bezeichnet, die als Wechselspannung an der Verbindungsleitung anliegt. Je nach Übertragungsstandard erfüllt der Carrier dabei weitere Anforderungen. Insbesondere enthält er aufmodulierte Daten, bspw. Nutzdaten oder IDLE-Daten, die in Übertragungspausen auf dem Träger übertragen werden.

Erfindungsgemäß entspricht bei dem erfindungsgemäßen Verfahren die physikalische Verbindung zwischen zwei Teilnehmern einem Ethernet-Standard mit elektrischer Datenleitung. Prinzipiell erlaubt der Ethernetstandard neben der elektrischen Datenleitung auch die optische Datenleitung über LWL. Die Verwendung eines Ethernet-Standards mit elektrischer Datenleitung, bspw. nach dem Standard IEEE 802.3, in einem Netzwerk mit Ringtopologie, insbesondere in einer zeitkritischen Umgebung, ermöglicht die Verwendung von bewährten Komponenten, die preisgünstig bereitstellbar und wartungsfreundlich sind.

Es ist vorgesehen, bei dem erfindungsgemäßen Verfahren zur Überwachung des Trägersignals das False-Carrier-Indication Signal zu verwenden. Dieses Signal wird von Ethernet-Schnittstellen-Schaltungen bereitgestellt, was die Verwendung in einfacher Weise erlaubt. Die erfindungsgemäße Verwendung dieses Signals ermöglicht die Erkennung einer fehlerhaften Verbindung innerhalb weniger hundert Nanosekunden.

Das erfindungsgemäße Verfahren wird in einem Netzwerk mit einer gegenläufigen Doppelringstruktur verwendet, in dem jeder Teilnehmer eine Eingangs- und eine Ausgangsschnittstelle für jeden Ring aufweist. Bei Verwendung einer Doppelringstruktur ist eine Aufrechterhaltung des Netzwerkbetriebes auch bei Ausfall einer Verbindungsstrecke durch entsprechend ausgeführte Datenumleitung bereitstellbar. Ein Netzwerk, dessen Teilnehmer die Fähigkeit einer entsprechenden Umleitung aufweisen, wird als selbstheilendes Netzwerk bezeichnet.

In einer bevorzugten Ausgestaltung des Verfahrens überwacht wenigstens ein Teilnehmer das Trägersignal an einer Eingangsschnittstelle.

Ebenso bevorzugt ist das erfindungsgemäße Verfahren, wenn der Teilnehmer nach Erkennen einer fehlerhaften Verbindung die Daten von der eigenen Ausgangsschnittstelle, die mit der Eingangsschnittstelle eines zweiten Teilnehmers verbunden ist, an die eigene Eingangsschnittstelle, die fehlerhaft mit der Ausgangsschnittstelle des zweiten Teilnehmers verbunden ist, leitet. Dieses vorteilhafte Datenleiten nach Erkennen einer fehlerhaften Verbindung ermöglicht auf einfache Weise, den Netzwerkbetrieb bspw. in einem Doppelring-Netzwerk aufrecht zu erhalten.

In einer besonders bevorzugten Ausführungsform wird das erfindungsgemäße Verfahren in einem Netzwerk nach einem SERCOS-Standard verwendet. Beispielsweise kann ein Netzwerk nach dem SERCOS-III-Standard verwendet werden, der die Verwendung von Ethernet-Komponenten bei einer SERCOS-Verbindung erlaubt.

Die erfindungsgemäße Vorrichtung zum Betreiben eines Netzwerks mit Ringtopologie weist Mittel zum Erkennen einer fehlerhaften Verbindung zwischen zwei Teilnehmern des Netzwerks durch Überwachen des Trägersignals auf.

Vorteilhafterweise weist die erfindungsgemäße Vorrichtung Mittel auf, um eine oder alle vorteilhaften Ausgestaltungen des erfindungsgemäßen Verfahrens durchzuführen. Insbesondere ist die Verwendung einer erfindungsgemäßen Vorrichtung in einem Ethernet-Netzwerk bevorzugt, wobei. das False-Carrier-Indication Signal zur Überwachung des Trägersignals verwendet wird.

Die erfindungsgemäße Vorrichtung weist zwei Eingangsschnittstellen, zwei Ausgangsschnittstellen und zwei Multiplexerschaltungen, die die Eingangsschnittstellen mit den Ausgangsschnittstellen derart verbinden, dass im fehlerfreien Betrieb jede Eingangsschnittstelle mit einer zugehörigen Ausgangsschnittstelle verbunden ist und dass nach dem Erkennen einer fehlerhaften Verbindung an einer Eingangsschnittstelle die zugehörige Ausgangsschnittstelle mit der anderen Eingangsschnittstelle verbunden wird, auf. Diese Ausführungsform ist einfach und kostengünstig herzustellen.

Ein erfindungsgemäßes Netzwerk weist wenigstens eine erfindungsgemäße Vorrichtung auf.

### Figurenbeschreibung

Im Folgenden sollen die Erfindung und deren Vorteile anhand eines in den Figuren dargestellten Ausführungsbeispiels näher erläutert werden.

Es zeigt
- Figur 1: ein Netzwerk mit Doppelringstruktur, wobei eine Verbindung zwischen zwei Teilnehmern unterbrochen ist, und
- Figur 2: eine bevorzugte Ausführungsform der erfindungsgemäßen Vorrichtung.

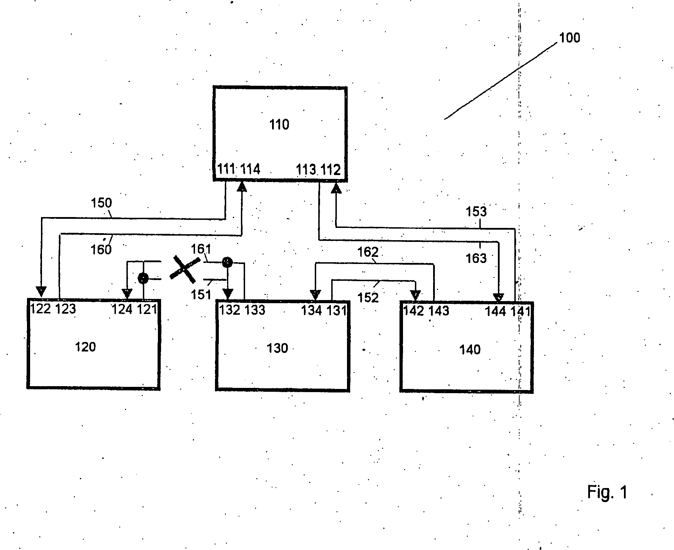

In Figur 1 ist ein Netzwerk mit Ringtopologie insgesamt mit 100 bezeichnet. Das Netzwerk 100 setzt sich zusammen aus vier Teilnehmern 110, 120, 130, 140, einem primären Ring 150, 151, 152, 153 und einem sekundären Ring 160, 161, 162, 163. Jeder Teilnehmer 110, 120, 130, 140 weist für den primären Ring 150, 151, 152, 153 eine Ausgangsschnittstelle 111, 121, 131, 141 und eine Eingangsschnittstelle 112, 122, 132, 142 auf. Ebenso weist jeder Teilnehmer 110, 120, 130, 140 für den sekundären Ring 160, 161, 162, 163 eine Ausgangsschnittstelle 113, 123, 133, 143 und eine Eingangsschnittstelle 114, 124, 134, 144 auf.

Auf diese Weise ist jeder Teilnehmer mit einem benachbarten Teilnehmer über zwei Ringverbindurigsstücke über jeweils eine Eingangs- und eine Ausgangsschnittstelle verbunden. Beispielsweise ist der Teilnehmer 110 mit dem Teilnehmer 120 über das-primäre Ringstück 150 von der Ausgangsschnittstelle 111 des Teilnehmers 110 zu der Eingangsschnittstelle 122 des Teilnehmers 120 verbunden.

Ebenso sind die beiden Teilnehmer 110, 120 über das Ringstück 160'des sekundären Rings über die Schnittstellen 123 und 114 verbunden.

Jeder der Teilnehmer 110, 120, 130, 140 überwacht nun im vorliegenden Beispiel an jeder seiner Eingangsschnittstellen 112, 114, 122, 124, 132, 134, 142, 144 das Trägersignal bzw. den Carrier auf dem jeweiligen Verbindungsstück. Die Verbindungsstücke 150, 160, 151, 161, 152, 162, 153, 163 sind physikalisch als Ethernet-Verbindungen mit elektrischer Datenübertragung, bspw. als Fast-Ethernet nach dem Standard IEEE 802.3u, ausgeführt.

Tritt nun eine Unterbrechung des Verbindungsstückes 151 und 161 auf, erkennen der Teilnehmer 120 an seiner Eingangsschnittstelle 124 und der Teilnehmer 130 an seiner Eingangsschnittstelle 132 eine Veränderung des Trägersignals.

Im fehlerfreien Betrieb werden die Daten vor der Übertragung mehrfach codiert (bspw. PCS-Code, Scrambler). Durch diese Codierung entsteht ein hochfrequentes Trägersignal selbst dann, wenn nur Nullen bzw. Einsen oder überhaupt keine logischen Daten übertragen werden. Bei einer Leitungsunterbrechung bleibt das Trägersignal nun statisch auf konstantem Pegel. Dadurch erkennen die Teilnehmer 120 und 130, dass die Verbindung von ihren Eingangsschnittstellen 124 und 132 zu den jeweiligen Ausgangsschnittstellen des benachbarten Teilnehmers fehlerhaft ist.

In einer bevorzugten Ausführungsform des erfindungsgemäßen Verfahrens kann zur Detektion der Unterbrechung das False-Carrier-Indication Signal des Ethernet Bausteins benutzt werden. Bei einer Leitungsunterbrechung entsteht durch die Dekodierung des Trägersignals ein zufälliges Datenmuster von Nullen und Einsen. Dabei handelt es sich in der Regel um ungültige Datenmuster, die der Baustein als fehlerhaft erkennt und-entsprechend reagiert, d.h. er zeigt ein False-Carrier-Indication Signal an.

Um ein gültiges Datenmuster zu erhalten, müssen beim Senden von Telegrammen Codegroups in vorgeschriebener Reihenfolge übertragen werden, beginnend mit einer Start-Of-Stream-Sequenz. In Übertragungspausen, d.h. wenn logisch keine Daten übertragen werden, werden vom Sender IDLE-Codes gesendet. Alle anderen Datenmuster sind nicht erlaubt. Das Ausbleiben der IDLE-Codes erzeugt ungültige Codegroups und führt ebenfalls zum Ansprechen der Carrier-Überwachung.

Gemäß dieser Ausführungsform der Erfindung ist es nicht notwendig, eine fehlerhafte Verbindung auf einer höher angeordneten Netzwerkschicht zu detektieren, bspw. dadurch, dass über eine Ausgangsschnittstelle auf einen Ring ausgesandte Daten nach einem kompletten Umlauf nicht mehr an den Sender zurückkommen.

Gemäß einer besonders bevorzugten Ausführungsform des erfindungsgemäßen Verfahrens leiten nun die beiden Teilnehmer 120 und 130 ihre Daten entsprechend um. Der Teilnehmer 120 leitet seine Daten von seiner Ausgangsschnittstelle 121 an seine Eingangsschnittstelle 124, d.h. vom primären auf den sekundären Ring. Der Teilnehmer 130 leitet seine Daten von der Ausgangsschnittstelle 133 auf die Eingangsschnittstelle 132, d.h. vom sekundären auf den primären Ring. Es versteht sich, dass der jeweilige Teilnehmer diese Leitung der Daten auf identische Weise durchführt, wenn nur eines der Ringstücke 151, 161 unterbrochen ist.

Der Ring ist nunmehr wieder geschlossen. Auf beiden Ringen übertragene Daten erreichen nun jeden Teilnehmer und gelangen schließlich zum aussendenden Teilnehmer zurück.

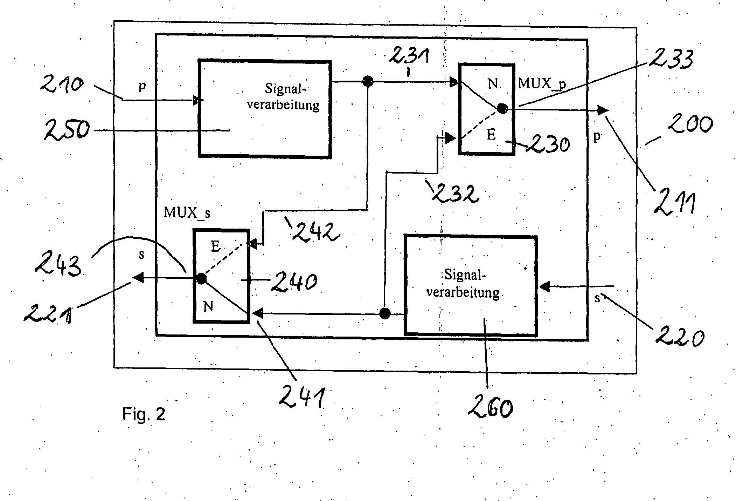

Figur 2 zeigt die bevorzugte Ausführungsform einer erfindungsgemäßen Vorrichtung. Die Vorrichtung ist insgesamt mit 200 bezeichnet. Die Vorrichtung 200 weist eine Eingangsschnittstelle 210 und eine Ausgangsschnittstelle 211 für den primären Ring, der mit p bezeichnet ist, und eine Eingangsschnittstelle 220 und eine Ausgangsschnittstelle 221 für den sekundären Ring, der mit s bezeichnet ist, auf. Die Vorrichtung kann insbesondere Bestandteil eines Teilnehmers 110, 120, 130, 140 aus Figur 1 oder der Teilnehmer selbst sein.

Die Vorrichtung 200 weist weiterhin zwei Multiplexerschaltungen 230, 240 und zwei Signalverarbeitungsschaltungen 250, 260 auf. Die Multiplexerschaltung 230 weist eine Eingangsschnittstelle 231 für den primären Ring p, eine Eingangsschnittstelle 232 für den sekundären Ring s und eine Ausgangsschnittstelle 233 auf. Die Signalverarbeitungsschaltung 250 ist mit der Eingangsschnittstelle 210 der Vorrichtung 200 verbunden. Der Multiplexerausgang ist mit der Ausgangsschnittstelle 211 der Vorrichtung 200 verbunden.

Die Multiplexerschaltung 240 weist eine Eingangsschnittstelle 241 für den sekundären Ring s, eine Eingangsschnittstelle 242 für den primären Ring p und eine Ausgangsschnittstelle 243 auf. Diese ist mit der Ausgangsschnittstelle 221 der Vorrichtung 200 verbunden.

Die Eingangsschnittstelle 220 der Vorrichtung 200 ist mit dem Eingang der Signalverarbeitungsschaltung 260 verbunden.

Die Vorrichtung 200 überprüft an ihren Eingangsschnittstellen 210, 220 das Trägersignal auf den beiden Ringen p und s.

Erkennt die Vorrichtung 200 eine fehlerhafte Verbindung an ihrer Eingangsschnittstelle 210 auf dem primären Ring p, trennt die Multiplexerechaltung 230 die Verbindung von der Eingangsschnittstelle 231 zur Ausgangsschnittstelle 233 und verbindet statt dessen die Eingangsschnittstelle 232 mit der Ausgangsschnittstelle 233. Auf diese Weise wird eine Verbindung von der Eingangsschnittstelle 220 der Vorrichtung 200 zur Ausgangsschnittstelle 211 der Vorrichtung hergestellt. Damit wird der sekundäre Ring s mit dem primären Ring p verbunden.

Erkennt die Vorrichtung 200 eine fehlerhafte Verbindung an der Eingangsschnittstelle 220 auf dem sekundären Ring s, trennt die Multiplexerschaltung 240 die Verbindung von der Eingangsschnittstelle 241 zur Ausgangsschnittstelle 243 und verbindet statt dessen die Eingangsschnittstelle 242 mit der Ausgangsschnittstelle 243. Auf diese Weise wird eine Verbindung von der Eingangsschnittstelle 210 des primären Ring p zur Ausgangsschnittstelle 221 des sekundären Ring s hergestellt.

## Patentansprüche

1. Verfahren zum Betreiben eines Netzwerks mit Ringtopologie, wobei das Netzwerk eine gegenläufige Doppelringstruktur (150-153, 160-163) aufweist und jeder Teilnehmer (110, 120, 130, 140) des Netzwerks eine Eingangs- (112, 114, 122, 124, 132, 134, 142, 144) und eine Ausgangsschnittstelle (111, 113, 121, 123, 131, 133, 141, 143) für jeden Ring (150-153, 160-163) aufweist, wobei die physikalische Verbindung (150-153, 160-163) zwischen zwei Teilnehmern (110, 120, 130, 140) einem Ethernet-Standard mit elektrischer Datenleitung entspricht,
**dadurch gekennzeichnet, dass** eine fehlerhafte Verbindung (150 bis 153, 160 bis 163) zwischen zwei Teilnehmern (110, 120, 130, 140) des Netzwerks durch Überwachen eines Trägersignals erkannt wird, wobei zur Überwachung des Trägersignals das False-Carrier-Indication Signal verwendet wird, wobei eine Aufrechterhaltung des Netzwerkbetriebes bei Ausfall einer Verbindungsstrecke durch eine entsprechend ausgeführte Datenumleitung bereitgestellt wird.

2. Verfahren nach Anspruch 1, **dadurch gekennzeichnet, dass** wenigstens ein erster Teilnehmer (110, 120, 130, 140) das Trägersignal an einer Eingangsschnittstelle (112, 114, 122, 124, 132, 134, 142, 144) überwacht.

3. Verfahren nach Anspruch 2, **dadurch gekennzeichnet, dass** der erste Teilnehmer (110, 120, 130, 140) nach Erkennen einer fehlerhaften Verbindung die Daten von der eigenen Ausgangsschnittstelle (111, 113, 121, 123, 131, 133, 141, 143), die mit der Eingangsschnittstelle (112, 114, 122, 124, 132, 134, 142, 144) eines zweiten Teilnehmers (110, 120, 130, 140) verbunden ist, an die eigene Eingangsschnittstelle (112, 114, 122, 124, 132, 134, 142, 144), die fehlerhaft mit der Ausgangsschnittstelle (111, 113, 121, 123, 131, 133, 141, 143) des zweiten Teilnehmers (110, 120, 130, 140) verbunden ist, leitet.

4. Verfahren nach einem der vorstehenden Ansprüche, **dadurch gekennzeichnet, dass** es in einem Netzwerk nach einem SERCOS-Standard verwendet wird.

5. Vorrichtung (200) zum Betreiben eines Netzwerks mit Ringtopologie, wobei das Netzwerk eine gegenläufige Doppelringstruktur (150-153, 160-163) aufweist, und wobei die physikalische Verbindung zwischen zwei Teilnehmern des Netzwerks einem Ethernet-Standard mit elektrischer Datenleitung entspricht, mit Mitteln zum Erkennen einer fehlerhaften Verbindung zwischen zwei Teilnehmern (110, 120, 130, 140) des Netzwerks durch Überwachen eines Trägersignals, **gekennzeichnet durch** zwei Eingangsschnittstellen (210, 220), zwei Ausgangsschnittstellen (211, 221) und zwei Multiplexerschaltungen (230, 240), die die Eingangsschnittstellen (210, 220) mit den Ausgangsschnittstellen (211, 221) derart verbinden, dass im fehlerfreien Betrieb jede Eingangsschnittstelle (210, 220) mit einer zugehörigen Ausgangsschnittstelle (211, 221) verbunden ist und dass nach dem Erkennen einer fehlerhaften Verbindung an einer Eingangsschnittstelle (210, 220) die zugehörige Ausgangsschnittstelle (211, 221) mit der anderen Eingangsschnittstelle (210, 220) verbunden wird, wobei zur Überwachung des Trägersignals das False-Carrier-Indication Signal verwendet wird.

6. Vorrichtung (200) nach Anspruch 5 mit Mitteln, um ein Verfahren nach einem der Ansprüche 2 bis 4 durchzuführen.

7. Netzwerk mit einer Vorrichtung (200) gemäß einem der Ansprüche 5 oder 6.

## Claims

1. Method for the operation of a network with a ring topology, wherein the network has a contra-rotating double-ring structure (150-153, 160-163) and each subscriber (110, 120, 130, 140) in the network has an input interface (112, 114, 122, 124, 132, 134, 142, 144) and an output interface (111, 113, 121, 123, 131, 133, 141, 143) for each ring (150-153, 160-163), wherein the physical connection (150-153, 160-163) between two subscribers (110, 120, 130, 140) is based on an Ethernet standard with an electrical data line,
**characterized in that**
an erroneous connection (150 to 153, 160 to 163) between two subscribers (110, 120, 130, 140) in the network is recognized by monitoring a carrier signal, the carrier signal being monitored using the False-Carrier-Indication signal, with maintenance of the network operation in the event of failure of a connecting path being provided by means of appropriately configured data rerouting.

2. Method according to Claim 1, **characterized in that** at least one first subscriber (110, 120, 130, 140) monitors the carrier signal on an input interface (112, 114, 122, 124, 132, 134, 142, 144).

3. Method according to Claim 2, **characterized in that** the first subscriber (110, 120, 130, 140), having recognized an erroneous connection, routes the data from its own output interface (111, 113, 121, 123, 131, 133, 141, 143), which is connected to the input interface (112, 114, 122, 124, 132, 134, 142, 144) of a second subscriber (110, 120, 130, 140), to its own input interface (112, 114, 122, 124, 132, 134, 142, 144), which is erroneously connected to the output interface (111, 113, 121, 123, 131, 133, 141, 143) of the second subscriber (110, 120, 130, 140).

4. Method according to one of the preceding claims, **characterized in that** it is used in a network based on a SERCOS standard.

5. Apparatus (200) for the operation of a network with a ring topology, wherein the network has a contra-rotating double-ring structure (150-153, 160-163), and wherein the physical connection between two subscribers in the network is based on an Ethernet standard with an electrical data line, having means for recognizing an erroneous connection between two subscribers (110, 120, 130, 140) in the network by monitoring a carrier signal, **characterized by** two input interfaces (210, 220), two output interfaces (211, 221) and two multiplexer circuits (230, 240) which connect the input interfaces (210, 220) to the output interfaces (211, 221) such that during error-free operation each input interface (210, 220) is connected to an associated output interface (211, 221) and that following the recognition of an erroneous connection on an input interface (210, 220) the associated output interface (211, 221) is connected to the other input interface (210, 220), the carrier signal being monitored using the False-Carrier-Indication signal.

6. Apparatus (200) according to Claim 5 with means for carrying out a method according to one of Claims 2 to 4.

7. Network with an apparatus (200) according to one of Claims 5 and 6.

## Revendications

1. Procédé de gestion d'un réseau en anneau selon lequel
le réseau a une structure en double anneau (150-153,160-163) fonctionnant en sens opposés et
chaque participant (110, 120, 130, 140) du réseau a une interface d'entrée (112, 114, 122, 124, 132, 134, 142, 144) et une interface de sortie (111, 113, 121, 123, 131, 133, 141, 143) pour chaque anneau (150-153, 160-163),
la liaison physique (150-153, 160-163) entre deux participants (110, 120, 130, 140) correspondant au standard Ethernet avec liaison électrique de données,
**caractérisé en ce que**
on détecte une liaison (150-153, 160-163) erronée entre deux participants (110, 120, 130, 140) du réseau par la surveillance d'un signal de porteuse,
et pour surveiller le signal de porteuse, on utilise le signal d'indication de fausse porteuse,
on assure le maintien du fonctionnement du réseau en cas de défaillance d'un chemin de liaison par une déviation de données exécutée de manière correspondante.

2. Procédé selon la revendication 1,
**caractérisé en ce qu'**
au moins un participant (110, 120, 130, 140) surveille le signal de porteur arrivant dans une interface d'entrée (112, 114, 122, 124, 132, 134, 142, 144).

3. Procédé selon la revendication 2,
**caractérisé en ce que**
le premier participant (110, 120, 130, 140), ayant reconnu une liaison erronée, transmet les données de son interface de sortie (111, 113, 121, 123, 131, 133, 141, 143) reliée à l'interface d'entrée (112, 114, 122, 124, 132, 134, 142, 144) d'un second participant (110, 120, 130, 140) à la propre interface d'entrée (112, 114, 122, 124, 132, 134, 142, 144) qui est reliée par erreur à l'interface de sortie (111, 113, 121, 123, 131, 133, 141, 143) du second participant (110, 120, 130, 140).

4. Procédé selon l'une des revendications précédentes,
**caractérisé en ce que**
le réseau fonctionne selon le standard SERCOS.

5. Dispositif (200) pour la gestion d'un réseau en anneau ayant une structure en double anneau (150-153, 160-163), fonctionnant en sens opposés et
la liaison physique entre deux participants du réseau se fait selon le standard Ethernet avec une ligne électrique de transmission de données, des moyens pour détecter une liaison erronée entre deux participants (110, 120, 130, 140) du réseau par la surveillance d'un signal de porteuse,
**caractérisé par**
- deux interfaces d'entrée (210, 220),
- deux interfaces de sorties (211, 221) et
- deux circuits multiplexeurs (230, 240) reliant des interfaces d'entrée (210, 220) aux interfaces de sortie (211, 221) de façon qu'en cas de fonctionnement correct, chaque interface d'entrée (210, 220) est reliée à une interface de sortie correspondante (211, 221) et
en cas de détection d'une liaison erronée à une interface d'entrée (210, 220), l'interface de sortie (211, 221) correspondante est reliée à l'autre interface d'entrée (210, 220),
et pour la surveillance du signal de porteuse, on utilise le signal d'indication de fausse porteuse.

6. Dispositif (200) selon la revendication 5,
comportant des moyens pour exécuter un procédé selon l'une des revendications 2 à 4.

7. Réseau comportant un dispositif (200) selon l'une des revendications 5 ou 6.
